Europäisches Patentamt

European Patent Office

Office européen des brevets

(11) Veröffentlichungsnummer: **0 470 534 A2**

# EUROPÄISCHE PATENTANMELDUNG

(21) Anmeldenummer: **91113079.7**

(51) Int. Cl.5: **G01F 11/16**

(22) Anmeldetag: **03.08.91**

(30) Priorität: **08.08.90 DE 9011527 U**
**23.08.90 DE 9012113 U**

(43) Veröffentlichungstag der Anmeldung:
**12.02.92 Patentblatt 92/07**

(84) Benannte Vertragsstaaten:
**AT BE CH DE DK ES FR GB GR IT LI LU NL SE**

(71) Anmelder: **ANDOS TECKNIK FÜR DIE MEDIZIN GmbH**
**Kronsaalsweg, 40**
**W-2000 Hamburg 54(DE)**

(72) Erfinder: **Golz, Horst, Dipl.-Ing.**

**Planck-Strasse 3**
**W-2000 Wedel(DE)**
Erfinder: **Maurer, Jörg Peter, Dipl.-Ing.**
**Max-Brauer Allee 184B**
**W-2000 Hamburg 50(DE)**
Erfinder: **Griefahn, Joachim**
**Halstenbeker Weg 61**
**W-2000 Hamburg 54(DE)**

(74) Vertreter: **Liebelt, Rolf, Dipl.-Ing.**
**Baumbach & Liebelt Patentanwaltskanzlei**
**Ballindamm 15**
**W-2000 Hamburg 1(DE)**

(54) **Vorrichtung zum Übergeben eines kalibrierten Probevolumens von einem Aussenraum in einen Messraum.**

(57) Die Vorrichtung zum Übergeben einer sehr geringen Menge eines kalibrierten Probevolumens von einem Außenraum an ein Reagenzmedium in einen Meßraum weist einen in einer als Dichtsitz ausgebildeten Gehäusebohrung 2 verstellbaren Übergabeschieber 3 auf, der mit einem das Probevolumen bildenden und als Kapillare ausgestalteten Kanal 5 versehen ist. Der Kanal 5 ist aus einer Füllstellung vor einer mit dem Außenraum verbundenen Aufnahmeöffnung 6 zur Füllung des Probevolumens in eine Meßstellung so zu bewegen, daß gleichzeitig die Aufnahmeöffnung 6 durch den Übergabeschieber 3 verschlossen und das Probevolumen zu dessen Entleerung in den Meßraum eingebracht wird. An die in den Meßraum gerichtete Mündung der Gehäusebohrung 2 ist eine Dichtlippe 7 angearbeitet, die erst dann dichtend und abstreifend mit dem Übergabeschieber 3 in Eingriff kommt, wenn dieser aus der Füll- in die Meßstellung verstellt wird.

Fig.1

Die Erfindung betrifft eine Vorrichtung zum Übergeben einer sehr beringen Menge eines kalibrierten Probevolumens von einem Außenraum an ein Reagenzmedium in einem Meßraum mittels eines in einer als Dichtsitz ausgebildeten Gehäusebohrung verstellbaren Übergabeschiebers, der einen das Probevolumen bildenden und als Kapillare ausgebildeten Kanal aufweist, der aus einer Füllstellung vor einer mit dem Außenraum verbundenen Aufnahmeöffnung zur Füllung des Probevolumens in eine Meßstellung so zu bewegen ist, daß gleichzeitig die Aufnahmeöffnung durch den Übergabeschieber verschlossen und das Probevolumen zu dessen Entleerung in den Meßraum eingebracht wird.

Bei einer derartigen aus der DE-OS 3 507 032 bekannten, als Einweggerät ausgebildeten und im wesentlichen aus Kunststoff gefertigten Übergabevorrichtung, mit der eine sehr geringe Menge eines kalibrierten Probevolumens in einen hermetisch abgeschlossenen Meßraum, der ein Reagenz enthält, eingebracht werden kann, ohne die Abgeschlossenheit des Meßraumes dabei aufzuheben, kann aufgrund von Adhäsions- und/oder Kapillarkräften in den Dichtsitz zwischen Übergabeschieber und Gehäusebohrung Probemedium während des Füllens des das Probevolumen bildenden Kanals im Übergabeschieber eindringen. Diese am Übergabeschieber anhaftenden Mikrotropfen des Probemediums gelangen somit neben dem kalibrierten Probevolumen in den Meßraum und verändern die in den Meßraum abzugebende Probengröße, was z. B. bei quantitativen Analysen zu großen Fehlmessungen führt.

Aufgabe der Erfindung ist es nun, eine Vorrichtung zum Übergeben kleinster Menge eines kalibrierten Probevolumens von einem Außenraum in einen Meßraum zu schaffen, bei der fertigungstechnische Toleranzen und insbesondere physikalische Größen wie Adhäsions- und Kapillarkräfte die Größe der kalibrierten sowie in den Meßraum einzugebenden Probe nicht verändern.

Diese Aufgabe wird erfindungsgemäß ausgehend von einer Übergabevorrichtung der eingangs beschriebenen Gattung dadurch gelöst, daß an die in den Meßraum gerichtete Gehäusebohrung eine Dichtlippe angearbeitet ist, die mit dem Übergabeschieber bei dessen Verstellung von der Füll- in die Meßstellung dichtend und abstreifend in Eingriff kommt.

Mit der nach der Erfindung an der Mündung der Gehäusebohrung in den Meßraum vorgesehenen Dichtlippe, die erst während des Verstellens des Übergabeschiebers aus dessen Füll- in die Meßstellung dichtend an demselben anliegt, wird auch die geringste am Übergabeschieber anhaftende Menge des Probevolumens abgestreift, so daß nur das kalibrierte Probevolumen in den Meßraum gelangt. Dabei hat es sich als besonders vorteilhaft erwiesen, daß der Dichtlippe keine Dichtfunktionen während des Füllens der neuerungsgemäßen Übergabevorrichtung zukommt, sondern diese nur zum Abstreifen der am Übergabeschieber anhaftenden Mikrotropfen des Probemediums dient. Die Dichtlippe liegt somit vor dein Einsatz der Übergabevorrichtung nicht am Übergabeschieber an und ist folglich auch keinen mechanischen Beanspruchungen ausgesetzt, die ein Kaltfließen der aus Kunststoff gefertigten Dichtlippe bewirken und deren Abstreiffähigkeit beeinträchtigen können.

Bei einer zweckmäßigen Weiterbildung der Erfindung hat es sich bewährt, am Übergabeschieber zwischen dem das Probevolumen bildenden Kanal, der als den Übergabeschieber durchdringende Bohrung oder als den Übergabeschieber außen auf mindestens 180 ° umlaufende Nut ausgebildet sein kann und seinem in den Meßraum weisenden Ende eine mit der Gehäusebohrung zusammenwirkende Dichtwulst vorzusehen, um sowohl einen Verlust von Reagenzmedium aus dem Meßraum während der Lagerung der Übergabevorrichtung nach deren Fabrikation als auch ein Eindringen von Probemedium in den Meßraum während des Füllens des Probevolumens durch Undichtigkeiten des Dichtsitzes zwischen Gehäusebohrung und Übergabeschieber zu verhindern. Dabei hat es sich bewährt, die Dichtwulst als elastischen Dichtring auszubilden, der in eine im Übergabeschieber eingearbeitete Ringnut eingesetzt ist.

Ausführungsbeispiele der erfindungsgemäßen Übergabevorrichtung werden noch an Hand der Zeichnungen beschrieben. Es stellen dar:

Fig. 1 im vergrößerten Maßstab eine schematische Schnittansicht durch eine Übergabevorrichtung in Füllstellung,

Fig. 2 eine Schnittansicht der Übergabevorrichtung gemäß Fig. 1 in Meßstellung,

Fig. 3 im vergrößerten Maßstab eine schematische Schnittansicht durch eine andere Ausgestaltung einer Übergabevorrichtung in Füllstellung.

Fig. 4 im vergrößerten Maßstab eine Teilschnittansicht durch eine weitere Ausgestaltung einer Übergabevorrichtung in Füllstellung.

Fig. 5 eine Schnittansicht durch die Übergabevorrichtung gemäß Fig. 4 längs der Linie A - A

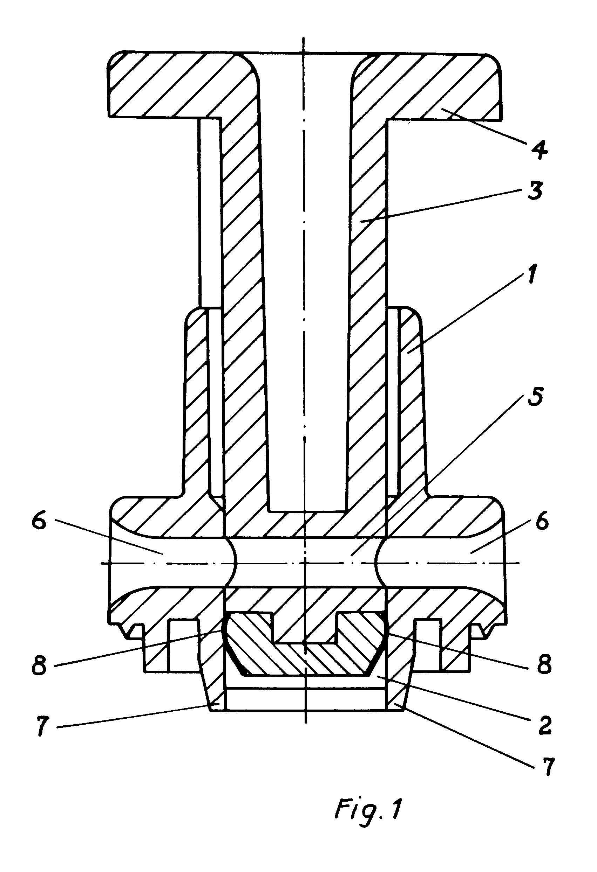

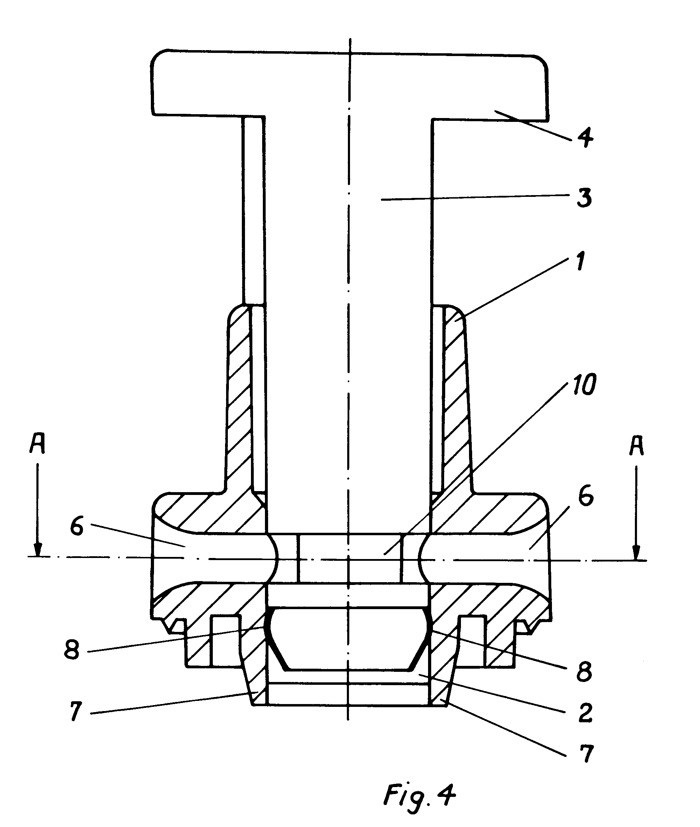

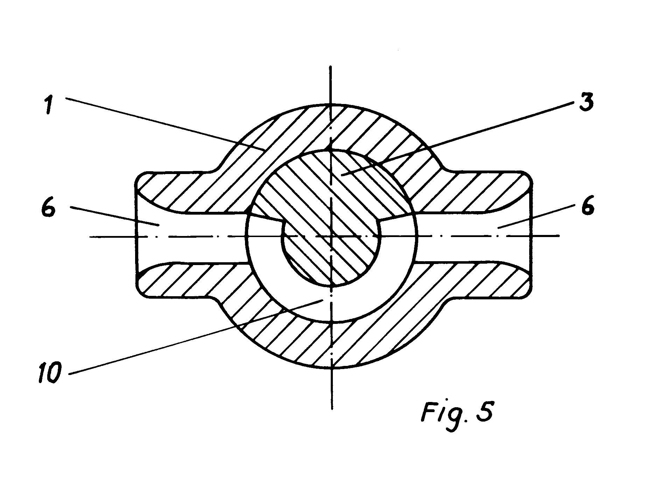

Die in den Figuren 1 bis 3 dargestellten Vorrichtungen zum Übergeben eines kalibrierten Probevolumens von einem Außenraum an ein Reagenz in einem Meßraum bestehen aus einem Gehäuse 1 aus Kunststoff mit einer axialen Gehäusebohrung 2, in die ein stempelförmiger Übergabeschieber 3 eingesetzt ist. Dabei bilden die sich berührenden Flächen der Gehäusebohrung 2 und des Übergabeschiebers 3 einen Dichtsitz. Der Übergabeschieber 3, der an einem Ende eine Druckplatte 4 trägt, ist von einer als Kapillare ausgestalteten Bohrung 5 (Fig. 1, 2 und 3) durchsetzt oder mit einer ebenfalls als Kapillare ausgestalteten und außen auf mindestens 180 ° umlaufenden Nut 10 (Fig. 4 und 5) versehen, die das Probevolumen darstellen. In der Füllstellung (Fig. 1, 3 und 4 bzw. 5) der Übergabevorrichtung fluchten die Bohrung 5 bzw. die Nut 10 mit Aufnahmeöffnungen 6 im Gehäuse 1. An der der Druckplatte 4 des Übergabeschiebers 3 gegenüberliegenden und in den nicht dargestellten Meßraum mündenden Öffnung der Gehäusebohrung 2 ist eine ringförmige Dichtlippe 7 angeformt, deren lichter Durchmesser geringer als derjenige der Gehäusebohrung 2 bzw. als der Außendurchmesser des Übergabeschiebers 3 ist.

Bei der in den Figuren 1 und 2 bzw. 4 gezeigten Übergabevorrichtung weist der Übergabeschieber 3 im der Druckplatte 4 gegenüberliegenden Endbereich eine Dichtwulst 8 auf, die in der Füllstellung (Fig. 1 und 4) dieser Vorrichtungen an der Wandung der Gehäusebohrung 2 dichtend anliegt.

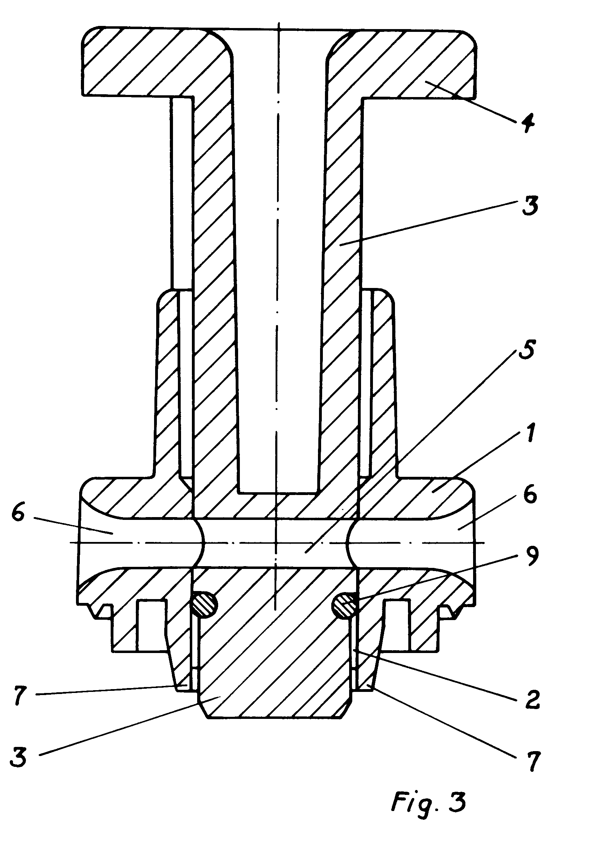

Diese Dichtwulst ist bei der Ausführungsform der erfindungsgemäßen Übergabevorrichtung nach Fig. 3 als elastischer Dichtring 9 ausgebildet, der in eine im Übergabeschieber 3 eingearbeitete Ringnut eingesetzt ist.

Die Übergabevorrichtung nach der Erfindung wird mit einem fest angefügten, jedoch nicht dargestellten Meßraum, in den eine vorbestimmte Menge eines Reagenzmediums eingefüllt ist, gefertigt und mit sich in Füllstellung befindlichem Übergabeschieber 3 ausgeliefert, in der die Dichtwulst 8 bzw. der Dichtring 9 an der Gehäusebohrung 2 zwischen deren Mündung in den Meßraum und den Aufnahmeöffnungen 6 anliegt und insbesondere während der Lagerung der Übergabevorrichtung ein Austreten von Reagenzmedium aus dem Meßraum über den Dichtsitz zwischen Gehäusebohrung 2 und Übergabeschieber 3 unterbindet. Von der Dichtwulst 8 bzw. dem Dichtring 9 wird aber auch während des Füllens des Probevolumens 5 bzw. 10 verhindert, daß in entgegengesetzter Richtung Probemedium unbeabsichtigt in den Meßraum gelangt.

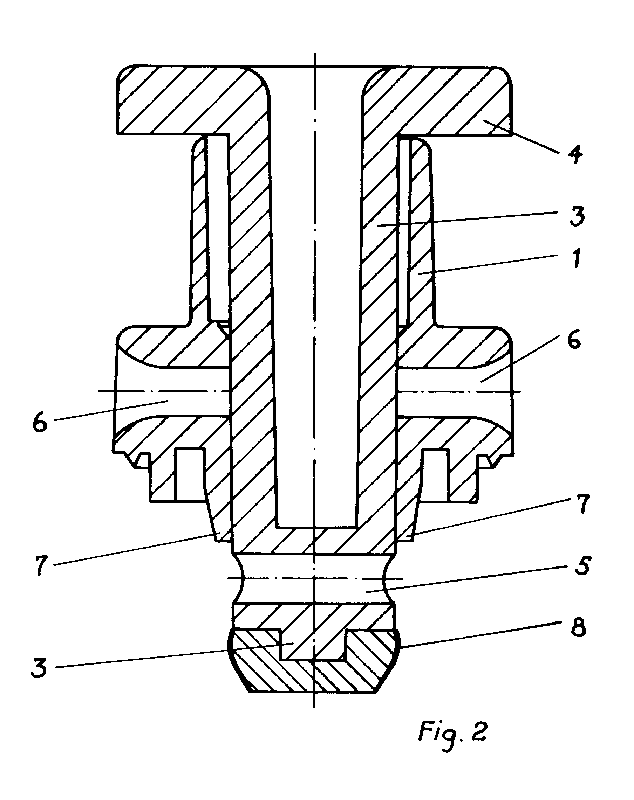

Nach dem Füllen des Probevolumens 5 bzw. 10 wird der Übergabeschieber 3 durch die Ausübung eines Druckes auf dessen Druckplatte 4 aus der in Fig. 1 gezeigten Füllstellung in die Meßstellung gemäß Fig. 2 verstellt. Dabei kommt der Übergabeschieber 3 mit der Dichtlippe 7 in Eingriff, die am Übergabeschieber 3 anhaftendes Probemedium abstreift, so daß nur die im Probevolumen 5 bzw 10 vorhandene Menge Probemedium in den Meßraum eingespeist wird und dort mit dem Reagenz reagiert, wodurch Meßfehler ausgeschlossen werden.

**Patentansprüche**

1. Vorrichtung zum Übergegen einer sehr geringen Menge eines kalibrierten Probevolumens von einem Außenraum an ein Reagenzmedium in einen Meßraum mittels eines in einer als Dichtsitz ausgebildeten Gehäusebohrung verstellbaren Übergabeschiebers, der einen das Probevolumen bildenden und als Kapillare ausgestalteten Kanal aufweist, der aus einer Füllstellung vor einer mit dem Außenraum verbundenen Aufnahmeöffnung zur Füllung des Probevolumens in eine Meßstellung so zu bewegen ist, daß gleichzeitig die Aufnahmeöffnung durch den Übergabeschieber verschlossen und das Probevolumen zu dessen Entleerung in den Meßraum eingebracht wird, dadurch gekennzeichnet, daß an die in den Meßraum gerichtete Mündung der Gehäusebohrung (2) eine Dichtlippe (7) angearbeitet ist, die erst dann dichtend und abstreifend mit dem Übergabeschieber (3) in Eingriff kommt, wenn dieser aus der Füll- in die Meßstellung verstellt wird.

2. Vorrichtung nach Anspruch 1, dadurch gekennzeichnet, daß der Übergabeschieber (3) zwischen der das Probevolumen (5) bildenden Bohrung und seinem in den Meßraum gerichteten Ende eine mit dem Bereich der Gehäusebohrung (2) zwischen Aufnahmeöffnung (6) und Dichtlippe (7) zusammenwirkende Dichtwulst (8) aufweist.

3. Vorrichtung nach Anspruch 2, dadurch gekennzeichnet, daß die Dichtwulst (8) als elastischer Dichtring (9) ausgebildet ist, der in eine im Übergabeschieber (3) eingearbeitete Ringnut eingesetzt ist.

4. Vorrichtung nach einem der Ansprüche 1 bis 3, dadurch gekennzeichnet, daß der das Probevolumen bildende Kanal als den Übergabeschieber (3) durchsetzende Bohrung (5) ausgebildet ist.

5. Vorrichtung nach einem der Ansprüche 1 bis 3, dadurch gekennzeichnet, daß der das Probevolumen bildende Kanal als den Übergabeschieber (3) außen auf mindestens 180 ° umlaufende Nut (10) ausgebildet ist.

Fig.1

Fig. 2

Fig. 3

*Fig. 4*

Fig. 5